Europäisches Patentamt

European Patent Office

Office européen des brevets

(11) Publication number: **0 460 962 B1**

# EUROPEAN PATENT SPECIFICATION

(45) Date of publication of patent specification: **20.12.95**   (51) Int. Cl.⁶: **A23B 7/10**

(21) Application number: **91305138.9**

(22) Date of filing: **07.06.91**

(54) **Food storage**

(30) Priority: **08.06.90 GB 9012790**

(43) Date of publication of application:
**11.12.91 Bulletin 91/50**

(45) Publication of the grant of the patent:
**20.12.95 Bulletin 95/51**

(84) Designated Contracting States:
**AT BE CH DE DK ES FR GB GR IT LI LU NL SE**

(56) References cited:
**EP-A- 0 141 875**
**EP-A- 0 255 814**
**GB-A- 2 173 017**
**US-A- 2 512 640**

(73) Proprietor: **SOLVAY INTEROX LIMITED**
**Baronet Works, Baronet Road**
**Warrington, Cheshire WA4 6HB (GB)**

(72) Inventor: **French, Madeline Susan**
**33 Morton Road**
**Runcorn,**
**Cheshire WA7 6PN (GB)**
Inventor: **Mearns, Stephen Roger**
**8 Winslow Close**
**Runcorn,**
**Cheshire WA7 6PL (GB)**

(74) Representative: **Pearce, Timothy et al**
**Solvay Interox Limited**
**Patent Department**
**P.O. Box 51**
**Moorfield Road**
**Widnes**
**Cheshire WA8 0FE (GB)**

Rank Xerox (UK) Business Services
(3.10/3.09/3.3.3)

## Description

The present invention relates to improvements in and/or modifications to a process for food storage, having regard to the shelf life of fresh food and/or to the provision or maintenance of the hygenic quality of the food during storage, and in particular to a process incorporating a step of chemically disinfecting fresh foodstuffs.

Fresh foodstuffs and specifically vegetables and fruit are typically exposed to the atmosphere both before and after they have been harvested, and inevitably they come into contact with a number of microorganisms, such as bacteria or moulds which can cause the foodstuff after harvest to rot and/or generate malodours and/or otherwise lose its freshness. The acceptability of fresh foodstuffs is usually judged by the human eye and/or nose or by the taste, ie organoleptically, rather than by a direct measurement of the microorganisms. The rate and/or extent of the development of microorganism-induced blemishes or defects is consequently a significant factor in determining the shelf-life of that foodstuff, and that rate, in turn, is dependent upon what measures are taken to remove, kill or inhibit the microorganisms, viz disinfection treatments.

Some disinfectant treatments can themselves result in a discolouration of the foodstuff or a readily apparant surface marking of the foodstuff which can resemble the appearance of rotten or less than wholesome food. Thus, even though such treatments may be suitable from a strictly scientific viewpoint, it would be unsafe to employ them, because their use would either result in the wasteful disposal of food that is wholesome or blur the distinction between wholesome and less than wholesome food and thereby increase the risk of inadvertent food poisoning.

One class of disinfectants which have been considered in the past for treating foodstuffs comprises low molecular weight peroxyacids, and particularly low weight aliphatic peroxyacids, containing from 2 to 4 carbons, such as peracetic acid. Such compounds have the benefit of exhibiting good disinfectant properties against a wide spectrum of microorganisms, both in vegetative and spore forms, and the further benefit that residues from their decomposition in situ comprise simple aliphatic carboxylic acids, such as acetic acid that are already employed in foodstuffs.

The use of a range of aliphatic peracids for disinfecting fruits and vegetables has already been described by Greenspan et al in USP 2 512 640. A generalisation was made by Greenspan that the treatments with peracids tended to inhibit or remove browning that would otherwise arise during storage and thereby render the foodstuff unacceptable. His assertions were based mainly upon treatments of aqueous slurries.

The practice has arisen for restaurants and other catering establishments to use pre-prepared vegetables and salad materials. Not unreasonably, such establishments wish to retain the quality of freshly prepared produce, and in particular retain the appearance of such produce coupled with an assurance that it is free from infection. In the course of research leading to the instant invention, it was found that when the simple process of Greenspan was applied during the pre-preparation phase to peeled, cut, shredded or scraped foodstuffs, ie those that are not slurried, the treatment either enhanced or at least failed to prevent or inhibit the discolouration of the foodstuffs that would occur during normal exposure to air.

It was also found that peracid treatments tended to shorten the shelf life of leaf vegetables, compared with conventional washing procedures using solely water, as a result of either shortening the period during which the the leaves remained crisp and/or enhancing the rate at which broken or otherwise exposed stems or leaf edges turned brown.

In view of the foregoing, it was concluded that a modification to or improvement of the Greenspan process was needed in order to enable peracids to combine more effectively the function of disinfection with the preservation of an organoleptically acceptable appearance for non-slurried foodstuffs.

The instant inventors postulated that the above-identified problems might be ameliorated if residual peracid could be destroyed at the end of the disinfection treatment and an obvious candidate to effect such destruction comprised sodium metabisulphite for at least three good reasons. First, it had been generally accepted by earlier researchers that it was capable of so acting, by virtue of its use in analytical techniques to quench peracids prior to determining the population of viable microorganisms. Secondly, by itself, it was a known agent for disinfecting materials intended for human consumption, such as beverages and potatoes. Thirdly, EP-A-0 255 814 (Honnay) discloses a disinfection process in which a hydrogen peroxide disinfection step is followed by a reduction step with sodium bisulphite, so that it was known in a related disinfection system.

Unfortunately, it was found that a post-peracid disinfection treatment with sodium metabisulphite was less than satisfactory. By way of example, the combination of treatments on peeled potatoes resulted in a tough skin when the potatoes were boiled. Likewise, the combination of treatments in many instances failed to ameliorate sufficiently or even promoted the decrisping or browning of leaf vegetables.

It is an objective of the present invention to locate a process for disinfecting foodstuffs with peracids which better overcomes or ameliorates the problems hereinbefore identified such as discolouration, and/or decrisping which reduce the shelf life of non-slurried foodstuffs.

According to the present invention there is provided a process for disinfecting harvested vegetative foodstuffs in non-slurry form which comprises the steps of contacting the foodstuff with an aqueous solution of an aliphatic peroxyacid in an amount that is effective as a disinfectant therefor and subsequently rinsing the foodstuff with an aqueous thiosulphate solution in an amount sufficient to remove substantially all residual peracid.

Advantageously, it has been found that by following the first stage peracid disinfection process with a rinsing process using thiosulphate, it is possible to combine the benefits of disinfection with the benefits of retaining an acceptable appearance for the foodstuff.

The peracid employed in the disinfection step is conveniently an aliphatic peracid containing from 2 to 12 carbons. Suitable peracids include perhexanoic, perheptanoic, peroctanoic, pernonanoic and perdodecanoic acids. Preferably the peracid contains from 2 to 4 carbon atoms, such as perpropionic or perbutyric acids. In many instances the peracid comprises peracetic acid, on account of its ready availability, effectiveness as a biocide against microorganisms, cost and nature of the carboxylic acid to which it is reduced. The solutions employed are suitably described as dilute, and in most instances a peracid concentration of not greater than $10^{-2}$ M is suitable. Often, the peracid concentration is at least $10^{-4}$ M and a convenient range within which to choose is from $5 \times 10^{-4}$ M to $5 \times 10^{-3}$ M of peracid, the maximum concentration taking into account the solubility for higher weight peracids. A particularly preferred treatment comprises the use of an aqueous solution containing from $10^{-3}$ M to $3 \times 10^{-3}$ M peracetic acid.

The peracid solution may additionally contain the corresponding carboxylic acid and/or hydrogen peroxide, depending upon the way in which the dilute application solution has been obtained. Dilute peracid solutions such as peracetic acid solutions for use in a process of the present invention can be produced on site by a controlled reaction between the corresponding carboxylic acid or anhydride with aqueous hydrogen peroxide, preferably in the presence of an acidic catalyst, but more conveniently they can be produced by dilution of a concentrate that contains equilibrated amounts of hydrogen peroxide, water, acetic acid, and peracetic acid or the other corresponding carboxylic/percarboxylic acids. Such concentrates containing nominally from around 1 to 40% w/w peracetic acid are commercially available and for ease of use a concentrate containing nominally between 1 and 16% w/w peracetic acid is preferred. The preferred concentrates tend to contain between 7 and 30% w/w acetic acid, and between 5 and 25% w/w hydrogen peroxide, the balance comprising water and minor amounts often each less than 1% of a stabiliser for the percompound such a phosphate or phosphonate, an acid catalyst and/or a wetting agent. Within such ranges the weight ratio of carboxylic acid to peracid tends to lie between 1:1 and 9:1. One favoured concentrate contains peracetic acid, acetic acid and hydrogen peroxide in a weight ratio of 2:3:9.

Dilute solutions obtained by dilution of equilibrium concentrates with water alone are naturally no longer in equilibrium, and slowly lose peracid by re-equilibration. For the present purpose, the peracid concentration in such solutions is sufficiently stable, and particularly if dilution and use occurs on the same day.

The disinfection process can most conveniently be carried out under cold or ambient temperature conditions, the peracid solution being from 0°C up to 30°C and often from 10 to 25°C.

Various methods can be used to bring the foodstuff into contact with the peracid solution. In the simplest method, the foodstuff is immersed in a bath of the peracid solution for an appropriate period of time selected, in conjunction with the other process conditions, including specifically the concentration of the peracid, with the intention of disinfecting the foodstuff surfaces effectively. The period of immersion often lasts at least 30 seconds and normally need not last longer than about 10 minutes. In vegetable processing factories, this can often be carried out more easily by passing the vegetables, for example on a belt or in mesh containers, through a peracid bath or baths at such a rate that the residence time is within the approximate range above. As an alternative, the foodstuff can be sprayed with the peracid solution, either in a fixed location or on a moving belt to ensure contact between foodstuff and solution for a period similar to that for immersion.

When a sufficiently long contact period has been employed, and at the discretion of the food processor, the surface layer of peracid solution can be removed by gentle means from the foodstuff. For example, the excess solution can be allowed to drip off, under the influence of gravity, possibly with the assistance of shaking of the foodstuff or it can be removed by directing a stream of air or an inert gas or by gentle centrifugation or the like. Alternatively or additionally, the foodstuff may be rinsed with water, which has the effect of at least diluting the peracid solution, and preferably with cold water.

Either subsequently to or instead of a simple water rinsing procedure, the peracid-treated foodstuff is treated in a second bath or spray with a solution of thiosulphate. This has the effect of neutralising to at least some extent the problems from residual peracid. In view of its availability and cost, it is particularly convenient to use sodium thiosulphate. The concentration of thiosulphate is normally also quite dilute, and preferably does not excede a concentration of 0.5M. A convenient concentration is often at least 10-2M and good results have been obtained using thiosulphate concentrations in the range of 3 x 10-2M to 0.5M. The retention of the efficacy through more than a 10 fold range of concentrations is of benefit, in that the process can consequently tolerate substantial dilution during its operation, which could happen as a result of carry-over from a preceding treatment. The thiosulphate solution can be contacted with the foodstuff using the various methods referred to herein before for contact with the peracid solutions. The period of contact is likewise, preferably, selected within a range of from 30 seconds to 10 minutes and likewise this step in the process can be carried out conveniently at ambient water temperature, which is often but not exclusively in the region of 0 to 30°C, and often 5 to 20°C.

The invention treatment is best effected upon the foodstuffs when they have been processed to the form in which they are stored and/or distributed to catering establishments and/or the retail trade. The foodstuffs which can be treated beneficially by a process according to the present invention comprise the edible parts of plants which during food preparation processing, a substantially solid surface is newly exposed and those which wilt or rot after a short storage period under ambient conditions.

In particular, but not exclusively, the invention process can be employed in respect of any vegetables or like foodstuffs which may be peeled or scraped, or divided into segments, cubes or chips in the course of preparation for consumption. It will be recognised that other foodstuffs are shredded, particularly in the course of preparing them for incorporation in salads. These include root vegetables such as potato, carrot, kohl rabi, parsnip, radish, salsify, turnip and yam (sweet potato). The foodstuffs also comprise leaf vegetables such as the cruciferi family, including cabbage, ranging in colour from red to white or green, and sprouts, and the edible florets produced by some members including broccoli, calabrese and cauliflower, the lettuce family, including cos, butter-head and especially crisp-head varieties, spinach, chard, chinese leaves, and chicory or endive. The vegetables can further comprise stem vegetables such as celery or sprouted beans. The process can be applied to single foodstuffs or to mixed prepared foodstuffs, such as dry mixed salads or mixed vegetables. Other foodstuffs which can benefit from the invention process include peeled and sliced fruit, such as a peach or nectarin.

The treated foodstuffs can subsequently be stored in air contact or in evacuated containers, and preferably under refrigerated conditions, such as between 2 and 6°C.

Having described the invention in general terms, specific embodiments will now be described in greater details, by way of example only.

In the trials described hereinbelow, aqueous peracetic acid solutions were obtained by diluting an equilibrium concentrate, commercially available from Interox into water to attain the stated peracetic acid concentrations, which were checked by titration. The concentrate had the following approximate nominal composition:-

|                              | % w/w |
|------------------------------|-------|
| peracetic acid               | 1     |
| acetic acid                  | 9     |
| hydrogen peroxide            | 5     |
| water                        | 81    |
| equilibrating agent/stabiliser | 2   |

Preliminary sets of trials to confirm the effectiveness of peracetic acid as a disinfectant was carried out by contacting peeled potatoes, peeled carrots and lettuce leaves (iceberg - a crisphead variety) with peracetic acid solutions and also in some tests with a subsequent rinse to neutralise residual peracetic acid and comparing the results obtained with those obtained from a control set, in which no disinfectant treatment was used. The concentrations of peracetic acid employed ranged from 0.025 g/l (3 x 10-4M) to 0.25 g/l (3 x 10-3M). In each test, the foodstuff was immersed in a peracetic acid solution for 5 minutes and in combination trials, subsequently immersed for 5 minutes in a neutraliser solution.

The microbial levels on the foodstuffs after such treatments were determined by shaking a measured weight of prepared foodstuff with a measured weight of saline solution, and after appropriate serial dilution,

4

plate counts of samples of solutions on agar were determined in conventional manners for the selected microorganism. The trials sought to determine the total viable microorganism and a small number of representative individual microorganisms, namely Pseudomonas species, Escherichi coli and fungi. By comparing the microorganism counts in the control set with those which employed a peracetic acid solution or combination of the latter with a-neutraliser rinse, the trials confirmed that peracetic acid treatment caused a significant reduction in microorganism levels on the surface of prepared foodstuffs and particularly bacterial levels, both when employed by itself or when followed by a neutraliser rinse.

In a related set of trials, measurements of microbial levels on samples of further batches of the three above identified foodstuffs that had been stored either loose, in contact with the air, or sealed in a vaccuum pack, and compared with a control set of untreated foodstuff that had been stored in exactly the same way. These tests confirmed that during storage of a few days, the foodstuff samples which had been disinfected with peracetic acid and a reductant rinse continued to exhibit significant reductions in microbial levels arising from the disinfection treatment. In loose storage, it took about 2 to 3 days for the microbial levels on the peracetic acid treated foodstuffs to reach the microbial levels observed on the freshly prepared but untreated foodstuffs. By then, the microbial levels on the untreated foodstuff had increased very substantially.

A further series of trials were conducted in which the appearance of the treated foodstuff was judged by a panel of assessors.

Samples of peeled potatoes, white cabbage leaves, iceberg lettuce leaves and beansprouts were subjected to a series of treatments comprising in regime A, treatment with water only; in regime B, treatment with a peracetic acid solution only; in regime C treatment as in regime B followed by a neutralising rinse with a sodium metabisulphite solution and in regime D treatment as in regime B followed by a neutralising rinse with a sodium thiosulphate solution. Regimes A, B and C are described by way of comparison and regime D is according to the present invention.

In regime B, 2 x 2 variations were tested, namely peracid concentration of 0.1 and 0.25 g/l and immersion periods of 1 and 5 minutes. In regime C, the sodium metabisulphite concentrations of 5, 10, 25 g/l were employed for all the foodstuffs and 0.3 and 0.75 g/l employed for the leaf or sprout foddstuffs, the treatment comprising 5 minutes immersion. In regime D, the sodium thiosulphate concentrations of 10, 25 and 50 g/l were employed, the treatment comprising immersion for 5 minutes.

The treated potatoes were then stored in the presence of air in "polythene" bags for 48 hours at 4°C in a refrigerator and boiled for 20 minutes. The treated leaf vegetables were loose packed in "polythene" bags in the refrigerator and stored for 72 hours at 4°C. The appearance of the foodstuffs are summarised in the Table below, including a reference to colour and texture. The term light skin indicated a skin similar to that obtained when freshly peeled potatoes were boiled for the same length of time.

For leaf vegetables and beansprouts, the term good indicates that the leaf or sprout resembled closely freshly harvested material, reasonable that slight deterioration was apparent, such as in crispness but that the leaf or sprout still remained acceptable overall, and poor indicates that the leaf or sprout had deteriorated significantly, having lost its crispness. A combination of two descriptions for any regime indicates that the description differs from one concentration of the treatment agent to another, the result from lower concentration being given first.

## The Table

| Potatoes | appearance after 48 hours storage and | |
|---|---|---|
| | Before Boiling | After Boiling |
| A | Brown, poor | Brown, light skin |
| B | Brown, very poor | Brown, tough skin |
| C | White, good | White, tough skin |
| D | White, good | White, light skin |

| Lettuce | appearance after | |
|---|---|---|
| | 48 hours storage | 72 hours storage |
| A | Good | Good |
| B | Reasonable | poor |
| C | Poor | Poor |
| D | Good | Good |

| Cabbage | appearance after | |
|---|---|---|
| | 48 hours storage | 72 hours storage |
| A | Good | Good |
| B | Reasonable | Poor |
| C | Good/reasonable | Good/poor |
| D | Good | Good |

| Bean-spouts | appearance after | |
|---|---|---|
| | 48 hours storage | 72 hours storage |
| A | Reasonable | Reasonable |
| B | Reasonable | Poor |
| C | Reasonable | Poor |
| D | Good | Reasonable |

From the Table above, it can be seen the process according to the present invention significantly ameliorates the appearance disadvantages that manifest themselves when a peracid is used to disinfect the foodstuffs by comparing regimes A, B and D. Secondly, by comparing regimes B, C and D, it is apparent that the alternative reducing agent does not offer the same beneficial appearance for the foodstuffs. Moreover, it can be seen that the invention process represents a method of wide applicability, so that the same combination of treatments can be used for a range of foodstuffs, thereby maintaining the effectiveness of the treatment when a food processor changes from processing one foodstuff to another, and accordingly keeping the process requirements simple.

Further trials were conducted on peeled and sliced peaches. Treatment regimes A to D are described by way of comparison only, and regimes E and F are according to the present invention.

In Regime A, the peach slices were submerged for 5 minutes in demineralised water. In Regimes B, C and D, the slices were submerged for 5 minutes in an aqueous solution of respectively 100ppm, 250ppm and 5000ppm of the aforementioned peracetic acid concentrate. In Regimes E and F, Regimes B and C were repeated, and each followed by a submersion of the drained peach slices in an aqueous solution of sodium thiosulphate (25gpl) for 5 minutes. The water or solution was allowed to drain off the slices, which were then stored in polythene bags at 4°C in a refrigerator. The appearance of the slices was monitored daily, for texture and discloration (browning) and the asseessments are given in the Table below. "VG" indicates that the slices had a similar appearance to frsehly sliched peaches, "good" that the appearance was slightly worse, either in browning or firmness of texture, "fair" that the peaches were noticeably browner or less firm fleshed, but still just acceptable for consumption. "Poor" indicated that the slices were so significantly discolored or softened as to be unacceptable for human consumption and "VP" indicated that the fruit was well below an acceptable appearance.

| Treatment Regime | Appearance after (days) | | | | |
|---|---|---|---|---|---|
| | 1 | 2 | 3 | 4 | 5 |
| A | poor | V P | V P | - | - |
| B | fair | poor | V P | - | - |
| C | poor | V P | V P | - | - |
| D | fair | poor | V P | - | - |
| E | V G | V G | V G | good | good |
| F | good | good | good | good | good |

From the foregoing results, it can be seen that the two stage treatment process of the present invention resulted in a substantially lengthened shelf life for the peach slices compared with either water washing or a single stage treatment with peracetic acid solutions.

**Claims**

1. A process for disinfecting harvested vegetative foodstuffs in non-slurry form which comprises the steps of contacting the foodstuff with an aqueous solution of an aliphatic peroxyacid in an amount that is effective as a disinfectant characterised in that the foodstuff is subsequently rinsed with an aqueous thiosulphate solution in an amount sufficient to remove substantially all residual peracid.

2. A process according to claim 1 characterised in that the aliphatic peroxyacid comprises peroxyacetic acid.

3. A process acording to claim 1 or 2 characterised in that the peroxyacid is employed at a concentration of from $5 \times 10^{-4}$M to $5 \times 10^{-3}$M.

4. A process according to any preceding claim characterised in that the concentration of thiosulphate in the rinsing step is from $3 \times 10^{-2}$M to 0.5M.

5. A process according to any preceding claim characterised in that freshly exposed potato surfaces or beansprouts, or lettuce or cabbage are treated.

6. A process according to any of claims 1 to 4 characterised in that freshly exposed peach surfaces are treated.

**Patentansprüche**

1. Ein Verfahren zum Desinfizieren von geernteten pflanzlichen Lebensmitteln, die in nicht aufgeschlämmter Form vorliegen, welches die Stufen des Kontaktierens der Lebensmittel mit einer wäßrigen Lösung einer aliphatischen Peroxysäure in einer Menge, die ausreicht, damit sie desinfizierend wirkt, umfaßt, dadurch gekennzeichnet, daß das Lebensmittel anschließend mit einer wäßrigen Thiosulfatlösung in einer Menge, die ausreicht, um im wesentlichen jeglichen Persäurerückstand zu entfernen, gespült wird.

**2.** Ein Verfahren nach Anspruch 1, dadurch gekennzeichnet ,daß die aliphatische Peroxysäure Peroxyessigsäure umfaßt.

**3.** Ein Verfahren nach Anspruch 1 oder 2, dadurch gekennzeichnet, daß die Peroxysäure in einer Konzentration von $5x10^{-4}$M bis $5x10^{-3}$M eingesetzt wird.

**4.** Ein Verfahren nach einem der vorstehenden Ansprüche, dadurch gekennzeichnet, daß die Konzentration an Thiosulfat in der Spülstufe $3x10^{-2}$M bis 0,5 M beträgt.

**5.** Ein Verfahren nach einem der vorstehenden Ansprüche, dadurch gekennzeichnet, daß frisch ausgesetzte Kartoffeloberflächen oder Sojabohnensprossen oder Kopfsalat oder Kohl behandelt werden.

**6.** Ein Verfahren nach einem der Ansprüche 1 bis 4, dadurch gekennzeichnet, daß frisch ausgesetzte Pfirsichoberflächen behandelt werden.

**Revendications**

**1.** Procédé pour désinfecter des denrées alimentaires végétales récoltées, sous une forme non transformée en bouillie, qui comprend les étapes consistant à mettre la denrée alimentaire en contact avec une solution aqueuse d'un peroxyacide aliphatique en une quantité qui est efficace comme désinfectant, caractérisé en ce qu'on rince ultérieurement la denrée alimentaire avec une solution aqueuse de thiosulfate en une quantité suffisante pour éliminer essentiellement la totalité du peroxyacide résiduel.

**2.** Procédé selon la revendication 1, caractérisé en ce que le peroxyacide aliphatique comprend l'acide peroxyacétique.

**3.** Procédé selon la revendication 1 ou 2, caractérisé en ce qu'on utilise le peroxyacide en une concentration de $5 \times 10^{-4}$M à $5 \times 10^{-3}$M.

**4.** Procédé selon l'une quelconque des revendications précédentes, caractérisé en ce que la concentration du thiosulfate dans l'étape de rinçage est de $3 \times 10^{-2}$M à 0,5M.

**5.** Procédé selon l'une quelconque des revendications précédentes, caractérisé en ce qu'on traite des surfaces de pommes de terre fraîchement exposées ou des germes de soja ou encore des laitues ou des choux.

**6.** Procédé selon l'une quelconque des revendications 1 à 4, caractérisé en ce qu'on traite des surfaces de pêches fraîchement exposées.